# EUROPÄISCHE PATENTSCHRIFT

(11) **EP 0 487 561 B1**
(45) Veröffentlichungstag und Bekanntmachung des Hinweises auf die Patenterteilung: **13.10.1993**
(21) Anmeldenummer: 90911600.6
(22) Anmeldetag: 17.07.1990
(51) Int. Cl.: B23B 29/03

(54) **WERKZEUGEINSATZ FÜR ZERSPANUNGSWERKZEUGE**
INSERT FOR CHIP REMOVING TOOLS
GARNITURE POUR OUTILS A ENLEVEMENT DE COPEAUX

(30) Priorität: 18.08.1989 DE 3927328
(43) Veröffentlichungstag der Anmeldung: 03.06.1992
(73) Patentinhaber: KOMET Präzisionswerkzeuge Robert Breuning GmbH, D-74354 Besigheim (DE)
(72) Erfinder: SCHEER, Gerhard, D-7121 Löchgau (DE)
(74) Vertreter: Wolf, Eckhard, Dr.-Ing.
(86) Internationale Anmeldenummer: EP9001168
(87) Internationale Veröffentlichungsnummer: WO9102614

(56) Entgegenhaltungen:
- US-A- 3 213 717
- US-A- 3 349 648
- US-A- 3 697 187
- US-A- 3 700 346
- US-A- 4 497 601
- Derwent's abstracts No. H77 29 K/23, SU 948 548, publ. week 8323 (KHARK ORGPRIMINSTRU)

## Beschreibung

Die Erfindung betrifft einen Werkzeugeinsatz für Zerspanungswerkzeuge mit einem in eine vorzugsweise als Sackloch ausgebildete Ausnehmung eines Werkzeuggrundkörpers einsetzbaren Gehäuse, einer im Gehäuse drehbar und unter der Einwirkung einer Axialkraft verschiebefest gelagerten als Gewindehülse ausgebildeten Einstellspindel, sowie im Gehäuse drehfest geführten, mit einem Verstellgewinde in ein Gewinde der Einstellspindel eingreifenden, durch Drehen der Einstellspindel axial verschiebbaren, an seinem über das Gehäuse überstehenden Kopf eine Schneidplatte tragenden Schneidplattenhalter, wobei die Gewindehülse in Gewindebereich mindestens einen radial durchgebenden Einschnitt aufweist, siche US-A-3 697 187.

Werkzeugeinsätze dieser Art können in Ausnehmungen von Ausdrehwerkzeugen und feststehenden spanabhebenden Werkzeugen eingesetzt werden und lassen sich im Bedarfsfall einfach gegen andere Einsätze austauschen. Da die Ausnehmungen im Werkzeuggrundkörper zumeist als tolerierte Bohrung oder als geräumte Vierkantöffnung ausgebildet sind, erfolgt die Verstellung des Schneidplattenhalters zweckmäßig von den Stirnseiten der Ausnehmung her. Dabei ist insbesondere bei drehenden Werkzeugen mit großem Durchmesser sowie bei weit ausladenden Werkzeugen eine Verstellung von der Schneidenseite her vorzuziehen.

Bei einem in eine Sackbohrung eines Bohrkopfes eingesetzten Werkzeugeinsatz dieser Art (DE-PS 29 31 302) erfolgt die Verstellung des Schneidplattenhalters durch Verdrehen eines mit einem Gewindezapfen in eine Gewindebohrung des Schneidplattenhalters eingreifenden, innerhalb des Gehäuses axial verspannten Einstellelements. Ein spielfreies Zustellen des Schneidplattenhalters ist bei dem bekannten Werkzeugeinsatz jedoch nicht möglich, da sich das Spiel zwischen Gewindezapfen und Verstellgewinde nicht beseitigen läßt. Um das Gewindespiel auszuschalten, muß dort der Schneidplattenhalter stets in gleicher Richtung zugestellt werden.

Ausgehend hiervon liegt der Erfindung die Aufgabe zugrunde, einen Werkzeugeinsatz für Zerspanungswerkzeuge zu entwickeln, dessen Schneidplattenhalter sich spielfrei zustellen läßt.

Zur Lösung dieser Aufgabe werden die im Patentanspruch 1 angegebenen Merkmale vorgeschlagen. Weitere vorteilhafte Ausgestaltungen und Weiterbildungen der Erfindung ergeben sich aus den abhängigen Ansprüchen.

Der Erfindung geht von dem Gedanken aus, die als Gewindehülse ausgebildete Einstellspindel in radialer Richtung gegen das Verstellgewinde des Schneidplattenhalters anzupressen um dadurch sowohl das Radialspiel des Schneidplattenhalters als auch das axiale Gewindespiel zu beseitigen. Das Anpressen der Gewindehülse gegen das Verstellgewinde erfolgt erfindungsgemäß durch Umlenkung der Axialkraft, mit welcher die Gewindehülse spielfrei im Gehäuse verspannt wird. Ein radial durchgehender, im wesentlichen axial verlaufender Einschnitt im Gewindebereich gewährleistet, daß die Gewindehülse unter Vorspannung spielfrei gegen das Verstellgewinde anliegt. Eine die Gewindehülse im Gewindebereich umfassende, zwischen einander zugewandten Schultern der Gewindehülse und des Gehäuses axial eingespannte Klemmhülse ist unter der Einwirkung der Axialkraft elastisch verformbar und dabei radial gegen die Gewindehülse anpreßbar.

Auch die Klemmhülse kann mehrere über ihren Umfang verteilt angeordnete, abwechselnd nach entgegengesetzten Seiten weisende axiale Einschnitte aufweisen.

Die Klemmhülse liegt gemäß einer weiteren bevorzugten Ausgestaltung der Erfindung mit stirnseitigen Konusflächen gegen je einen an der gehäuseseitigen und der gewindehülsenseitigen Schulter angeordneten Innenkonus an. Der Innenkonus kann dabei jeweils durch einen Lagerring gebildet sein, der axial gegen die Schultern der Gewindehülse bzw. des Gehäuses und radial gegen eine Bohrungsfläche des Gehäuses abgestützt ist.

Eine weitere bevorzugte Ausgestaltung der Erfindung sieht einen in ein Innengewinde des Gehäuses eindrehbaren Gewindespannring vor, der über einen Kugelkranz unter Ausübung der Axialkraft axial gegen die im Gehäuse angeordnete Gewindehülse anpreßbar ist. Die Gewindehülse weist dabei zweckmäßig einen umlaufenden Bund auf, dessen schneidplattenseitige Stirnfläche den Kugeln des Kugelkranzes als Lauffläche dient.

Gemäß einer vorteilhaften Ausgestaltung der Erfindung weist die Gewindehülse an ihrem schneidplattenseitigen Ende eine vorzugsweise gegenüber dem Innengewinde erweiterte Führungsbohrung für einen zylindrischen Schaftteil des Schneidplattenhalters auf.

Um ein Verdrehen des Schneidplattenhalters zu verhindern weist dieser gemäß einer weiteren bevorzugten Ausgestaltung der Erfindung an seinem der Schneidplatte gegenüberliegenden Ende ein in einer Axialführung des Gehäuses drehfest geführtes Mitnehmerstück auf. Die Axialführung ist zweckmäßig als im Querschnitt mehrkantige, vorzugsweise vierkantige Ausnehmung ausgebildet, in der das Mitnehmerstück paßgenau gleitend geführt ist. Um den Zusammenbau des Werkzeugs zu erleichtern, ist das Mitnehmerstück mit einer Keilnut auf einen axial überstehenden Keilzapfen des Schneidplattenhalters aufsteckbar und über eine axiale Schraubverbindung spielfrei mit diesem verbindbar.

Eine weitere vorteilhafte Ausgestaltung der Erfindung sieht vor, daß die Gewindehülse an ihrem schneidplattenseitig über das Gehäuse überstehenden Ende ein Mehrkantprofil zum Ansetzen eines Verstellschlüssels aufweist.

Zum Anzeigen der Verstellage des Schneidplattenhalters wird zweckmäßig auf das schneidplattenseitig über das Gehäuse überstehende Ende der Gewindehülse ein Skalenring aufgepreßt, der vorzugsweise den Gewindespannring axial verdeckt und mit einem ringförmigen Ansatz gegen einen in einem Axialeinstich des Gehäuses angeordneten Dichtring anliegt.

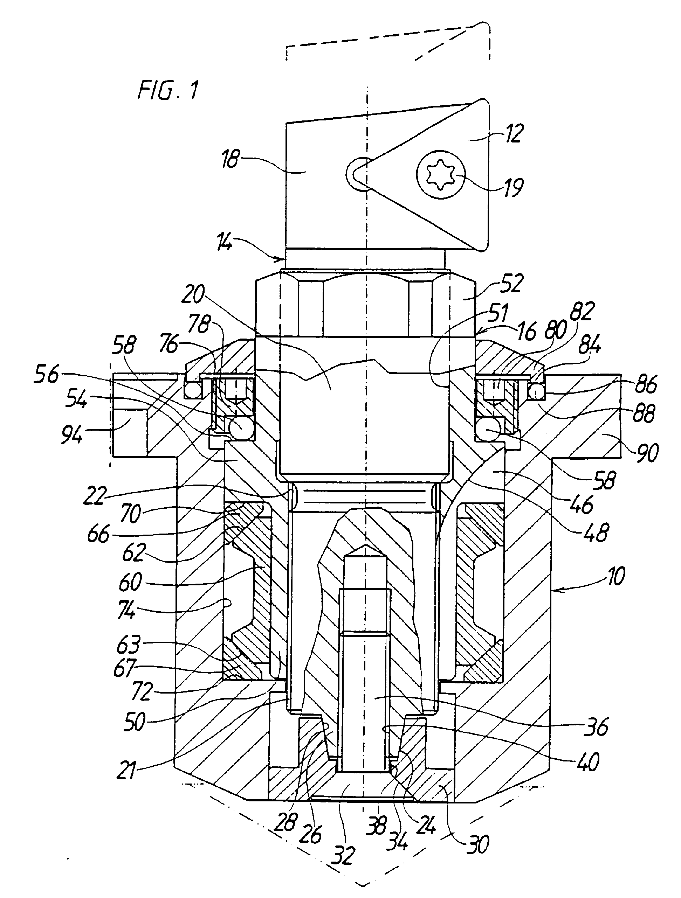

Im folgenden wird die Erfindung anhand eines in der Zeichnung in schematischer Weise dargestellten Ausführungsbeispiels näher erläutert. Es zeigen
- Fig. 1: eine Seitenansicht eines in eine radiale Ausnehmung eines Werkzeuggrundkörpers einsetzbaren Werkzeugeinsatzes mit axial verstellbarem Schneidplattenhalter in teilweise geschnittener Darstellung;

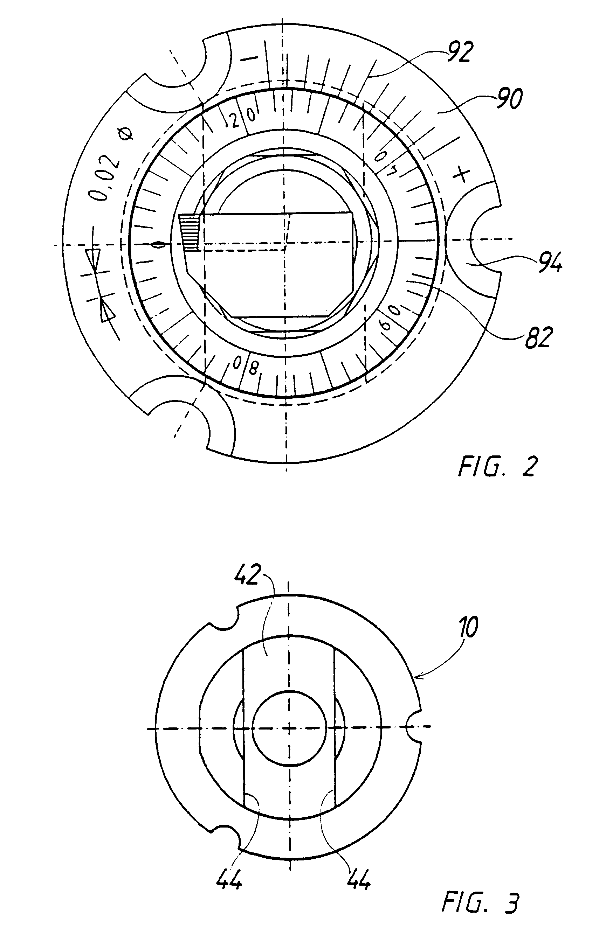

- Fig. 2: eine Vorderansicht des Werkzeugeinsatzes nach Fig. 1;
- Fig. 3: eine Rückseitenansicht des Einsatzgehäuses;

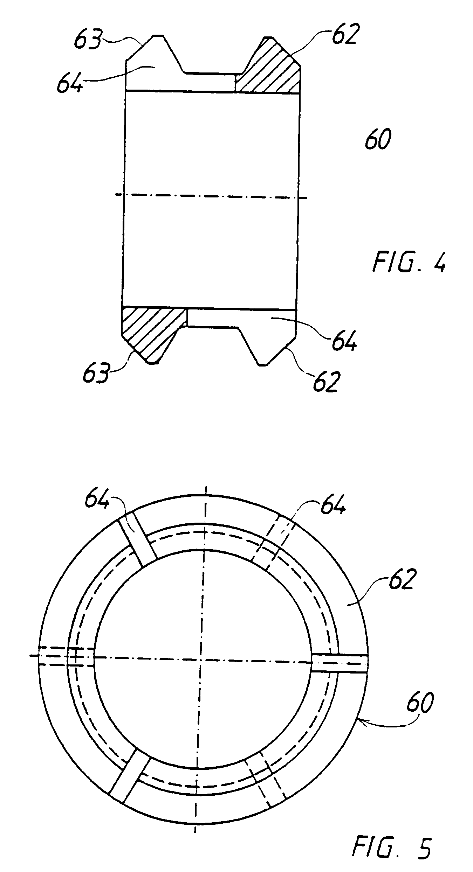

- Fig. 4: einen Längsschnitt durch die Klemmhülse des Werkzeugeinsatzes;
- Fig. 5: eine Stirnseitenansicht der Klemmhülse nach Fig. 4.

Der in der Zeichnung dargestellte Werkzeugeinsatz ist für den Einsatz in ein zylindrisches Sackloch im Grundkörper eines Feindrehwerkzeugs bestimmt.

Der Werkzeugeinsatz besteht im wesentlichen aus einem zylindrischen Gehäuse 10, einem innerhalb des Gehäuses 10 axial verstellbaren, eine Wendeschneidplatte 12 tragenden Schneidplattenhalter 14, sowie einer im Gehäuse 10 verschiebefest und drehbar gelagerten, als Gewindehülse 16 ausgebildeten Einstellspindel.

Der Schneidplattenhalter 14 weist einen Schneidenkopf 18 mit einer Halterung 19 für die Wendeschneidplatte 12, sowie einen an den Schneidenkopf 18 anschließenden Führungsschaft 20 auf. Auf der dem Schneidenkopf 18 abgewandten Seite des Führungsschafts 20 ist der Schneidplattenhalter 14 mit einem Verstellgewinde 21 versehen, welches in das Innengewinde 22 der Gewindehülse 16 eingreift. An der gewindeseitigen Stirnseite des Schneidplattenhalters 14 ist ein mit Schrägflächen 24 versehener Keilzapfen 26 angeformt, der in eine Keilnut 28 eines Mitnehmerstücks 30 eingreift. Der Werkzeughalter 14 und das Mitnehmerstück 30 werden durch eine mit ihrem Kopf 32 in eine konische Ausdrehung 34 des Mitnehmerstücks versenkte, durch eine Bohrung 38 des Mitnehmerstücks 30 hindurchgreifende und in eine rückwärtige Gewindebohrung 40 des Schneidplattenhalters 14 eingreifende Spannschraube 36 unverdrehbar gegeneinander verspannt.

Das mit dem Schneidplattenhalter 14 verbundene Mitnehmerstück 30 weist zwei zueinander parallele Außenflächen auf, die zwischen zwei einander gegenüberliegenden parallelen Innenflächen 44 einer im Gehäuse 10 angeordneten Querausnehmung 42 paßgenau gleiten.

Die Gewindehülse 16 weist im Gewindebereich einen einseitig offenen axialen Einschnitt 46 mit einer kreissegmentförmigen Schnittkontur 48 auf, der die im Gewindebereich verhältnismäßig dünn ausgebildete zylindrische Wand 50 der Gewindehülse 16 vollständig durchdringt. Der Einschnitt 46 gewährleistet, daß die Gewindehülse 16 im Gewindebereich unter Verringerung ihres Innendurchmessers elastisch verformbar und damit durch eine radial einwirkende Vorspannkraft gegen das Verstellgewinde 21 des Schneidplattenhalters 14 anpreßbar ist.

An ihrem schneidplattenseitigen Ende weist die Gewindehülse 16 eine gegenüber dem Innengewinde 22 erweiterte Führungsbohrung 51 für den Führungsschaft 20 des Schneidplattenhalters 14 sowie ein über die Stirnseite des Gehäuses 10 überstehendes Sechskantprofil 52 zum Ansetzen eines Verstellschlüssels auf. Auf ihrer äußeren Mantelfläche ist die Gewindehülse 16 mit einem umlaufenden Bund 54 versehen, dessen schneidplattenseitige Stirnfläche 56 den Kugeln 58 eines Kugelkranzes als Lauffläche dient.

Die Gewindehülse 16 wird in ihrem Gewindebereich von einer Klemmhülse 60 umfaßt, die mit stirnseitigen Konusflächen 62,63 und mehreren, über den Umfang verteilt angeordneten, abwechselnd nach entgegengesetzten Seiten weisenden axialen Einschnitten 64 versehen ist. Die Konusflächen 62,63 der Klemmhülse 60 liegen gegen den Innenkonus zweier Lagerringe 66,67 an, die sich in axialer Richtung gegen eine umlaufende Schulter 70 der Gewindehülse 16 bzw. eine Schulter 72 des Gehäuses 10 und in radialer Richtung gegen die zylindrische Innenfläche einer Gehäusebohrung 74 abstützen.

Die Gewindehülse 16 ist im Gehäuse 10 unter Zwischenklemmen der sich zwischen den Lagerringen 66,67 abstützenden Klemmhülse 60 durch eine schneidenseitig in ein Innengewinde 76 des Gehäuses 10 eingedrehten Gewindespannring 78 über den Kugelkranz axial eingespannt. Die durch den Gewindespannring 78 ausgeübte axiale Druckkraft wird im Bereich der konischen Anlageflächen zwischen den Lagerringen 66,67 und der Klemmhülse 60 in eine axiale und radiale Kraftkomponente zerlegt. Während durch die Axialkomponente die Gewindehülse 16 über die Klemmhülse 60 in axialer Richtung spielfrei gestellt wird, führt die Radialkomponente zu einer elastischen Verformung der Klemmhülse 60 in Richtung Gewindehülse 16, die ihrerseits unter elastischer Verformung im Bereich ihres Einschnitts 46 radial gegen das Verstellgewinde 21 des Schneidplattenhalters 14 gepreßt wird und diesen spielfrei stellt.

Der Gewindespannring 78 ist mit Ausnehmungen 80 für den Eingriff eines Verstellschlüssels versehen. Im montierten Zustand wird er durch einen auf das schneidplattenseitige Ende der Gewindehülse 16 aufgepreßten, eine Skala für die Verstellweganzeige tragenden Skalenring 82 verdeckt. Der Skalenring 82 liegt mit einem ringförmigen Ansatz 84 gegen einen in einem Axialeinstich 86 des Gehäuses 10 angeordneten Dichtring 88 an.

Das Gehäuse 10 weist schneidplattenseitig einen umlaufenden, mit einer Noniusskala 92 versehenen Flansch 90 auf, der mehrere randoffene Senkbohrungen 94 zur Aufnahme von in den Werkzeuggrundkörper eingreifenden Befestigungsschrauben aufweist.

## Patentansprüche

1. Werkzeugeinsatz für Zerspanungswerkzeuge, mit einem in eine vorzugsweise als Sackloch ausgebildete Ausnehmung eines Werkzeuggrundkörpers einsetzbaren Gehäuse, einer im Gehäuse drehbar und unter der Einwirkung einer Axialkraft verschiebefest gelagerten als Gewindehülse (16) ausgebildeten Einstellspindel sowie einem im Gehäuse drehfest geführten, mit einem Verstellgewinde in ein Gewinde der Einstellspindel eingreifenden, durch Drehen der Einstellspindel axial verschiebbaren, an seinem über das Gehäuse überstehenden Kopf eine Schneidplatte tragenden Schneidplattenhalter, wobei die Gewindehüle (16) im Gewindebereich mindestens einen radial durchgehenden Einschnitt (46) aufweist **dadurch gekennzeichnet,** daß die Einstellspindel durch Umlenkung eines Teils der Axialkraft mit ihrem Innengewinde (22) unter Vorspannung radial gegen das Verstellgewinde (21) des Schneidplattenhalters (14) anpreßbar ist, daß der Einschnitt (46) im wesentlichen axial verläuft und daß eine die Gewindehülse (16) im Gewindebereich umfassende, zwischen einander zugewandten Schultern (70, 72) der Gewindehülse (16) und des Gehäuses (10) axial eingespannte Klemmhülse (60) vorgesehen ist, die unter der Einwirkung der Axialkraft elastisch verformbar und dabei radial gegen die Gewindehülse (16) anpreßbar ist.

2. Werkzeugeinsatz nach Anspruch 1, **dadurch gekenn****zeichnet,** daß der Einschnitt (46) an dem der Schneidplatte gegenüberliegenden Ende der Gewindehülse (16) offen ist.

3. Werkzeugeinsatz nach Anspruch 1, **dadurch gekenn****zeichnet,** daß der Einschnitt (46) an beiden stirnseitigen Enden geschlossen ist.

4. Werkzeugeinsatz nach einem der Ansprüche 1 bis 3, **dadurch gekennzeichnet,** daß die Klemmhülse (60) mehrere über ihrem Umfang verteilt angeordnete, axiale Einschnitte (64) aufweist.

5. Werkzeugeinsatz nach Anspruch 4, **dadurch gekenn****zeichnet,** daß die axialen Einschnitte abwechselnd nach entgegengesetzten Seiten weisen.

6. Werkzeugeinsatz nach einem der Ansprüche 1 bis 5, **dadurch gekennzeichnet,** daß die Klemmhülse (60) mit stirnseitigen Konusflächen (62,63) gegen je einen an der gehäuseseitigen und der gewindehülsenseitigen Schulter (70,72) angeordneten Innenkonus anliegt.

7. Werkzeugeinsatz nach Anspruch 6, **gekennzeichnet** **durch** den Innenkonus aufweisende Lagerringe (66, 67), die axial gegen die Schultern (70,72) der Gewindehülse (16) bzw. des Gehäuses (10) und radial gegen eine Bohrungsfläche (74) des Gehäuses (10) abgestützt sind.

8. Werkzeugeinsatz nach einem der Ansprüche 1 bis 7, **gekennzeichnet durch** einen schneidenseitig in ein Innengewinde (76) des Gehäuses (10) eindrehbaren Gewindespannring (78), der über einen Kugelkranz unter Ausübung der Axialkraft axial gegen die im Gehäuse (10) angeordnete Gewindehülse (16) anpreßbar ist.

9. Werkzeugeinsatz nach Anspruch 8, **dadurch gekenn****zeichnet,** daß die Gewindehülse (16) einen umlaufenden Bund (54) aufweist, dessen schneidplattenseitige Stirnfläche (56) den Kugeln (58) des Kugelkranzes als Lauffläche dient.

10. Werkzeugeinsatz nach einem der Ansprüche 1 bis 9, **dadurch gekennzeichnet,** daß die Gewindehülse (16) an ihrem schneidplattenseitigen Ende eine vorzugsweise gegenüber dem Innengewinde (22) erweiterte Führungsbohrung (51) für einen zylindrischen Schaftteil (20) des Schneidplattenhalters (14) aufweist.

11. Werkzeugeinsatz nach einem der Ansprüche 1 bis 10, **dadurch gekennzeichnet,** daß der Schneidplattenhalter (14) an seinem der Schneidplatte (12) gegenüberliegenden Ende ein in einer Axialführung des Gehäuses (10) drehfest geführtes Mitnehmerstück (30) aufweist.

12. Werkzeugeinsatz nach Anspruch 11, **dadurch gekenn****zeichnet,** daß die Axialführung als im Querschnitt mehrkantige, vorzugsweise vierkantige Ausnehmung (42) ausgebildet ist, in der das Mitnehmerstück (30) paßgenau gleitend geführt ist.

13. Werkzeugeinsatz nach Anspruch 11 oder 12, **dadurch** **gekennzeichnet,** daß das Mitnehmerstück (30) mit einer Keilnut (28) auf einen axial überstehenden Keilzapfen (26) des Schneidplattenhalters (14) aufsteckbar und über eine axiale Schraubverbindung (36,40) spielfrei mit diesem verbindbar ist.

14. Werkzeugeinsatz nach einem der Ansprüche 1 bis 13, **dadurch gekennzeichnet,** daß die Gewindehülse (16) an ihrem schneidplattenseitig über das Gehäuse (10) überstehenden Ende ein Mehrkantprofil (52) zum Ansetzen eines Verstellschlüssels aufweist.

15. Werkzeugeinsatz nach einem der Ansprüche 1 bis 14, **dadurch gekennzeichnet,** daß auf das schneidplattenseitig über das Gehäuse (10) überstehende Ende der Gewindehülse (16) ein vorzugsweise den Gewindespannring (78) axial verdeckender Skalenring (82) aufpreßbar ist.

16. Werkzeugeinsatz nach Anspruch 15, **dadurch gekenn****zeichnet,** daß der Skalenring (82) mit einem ringförmigen Ansatz (84) gegen einen in einem Axialeinstich (86) des Gehäuses (10) angeordneten Dichtring (88) anliegt.

17. Werkzeugeinsatz nach einem der Ansprüche 1 bis 16, **dadurch gekennzeichnet,** daß das Gehäuse (10) schneidplattenseitig einen umlaufenden Flansch (90) mit vorzugsweise randoffenen Senkbohrungen (94) zur Aufnahme von in den Werkzeuggrundkörper eingreifenden Befestigungsschrauben aufweist.

## Claims

1. An insert for chip removing tools comprising a housing insertable into a recess of a tool base body, which recess is preferably constructed as a blind hole, a rotatably supported adjusting spindle which is designed as a threaded sleeve (16) and which becomes fixed against movement by the action of an axial force in the housing, and a machining blade insert holder axially movably guided and fixed against rotation in the housing, said holder engaging with an adjustment thread thereon a thread on the adjusting spindle to facilitate axial movement thereof by rotating the adjusting spindle, said holder carrying a machining blade insert on its head projecting axially beyond the housing, whereby the threaded sleeve (16) has in the thread area at least one radial through slot (46) characterized in that the adjusting spindle can be elastically deformed at its internal thread (22) radially against the adjustment thread (21) on the machining blade insert holder (14) by a portion of the axial force applied thereto, that the slot (46) is extending substantially axially, and that a clamping sleeve (60) is provided, which grips around the threaded sleeve (16) in the thread area and is clamped axially between shoulders (70, 72) on the threaded sleeve (16) and on the housing (10), which shoulders face one another, which clamping sleeve (60) can be radially elastically deformed by an axially applied force thereto and thereby radially against the threaded sleeve (16).

2. The insert according to Claim 1, characterized in that the slot (46) is open at the end of the threaded sleeve (16) remote from the machining blade insert.

3. The insert according to Claim 1, characterized in that the slot (46) is closed at both ends.

4. The insert according to one of the Claims 1 to 3, characterized in that the clamping sleeve (60) has several axially extending recesses (64) distributed over its circumference.

5. The insert according to Claim 4, characterized in that the axially extending recesses extend alternately in opposite directions.

6. The insert according to one of the Claims 1 to 5, characterized in that the clamping sleeve (60) has tapered axially facing faces (62, 63) each resting against an inside tapered surface arranged on a shoulder (70, 72) on the side of the housing and on a side of the threaded sleeve.

7. The insert according to Claim 6, characterized by bearing rings (66, 67) having the inside tapered surfaces thereon, which rings rest axially against the shoulders (70, 72) on the threaded sleeve (16) or on the housing (10) and radially against a bore surface (74) in the housing (10).

8. The insert according to one of the Claims 1 to 7, characterized by a threaded clamping ring (78) which can be threadedly rotated into an internal thread (76) in the housing (10) on the side of the blade insert and which threaded clamping ring can apply through a ball ring an axial force axially against the threaded sleeve (16) arranged in the housing (10).

9. The insert according to Claim 8, characterized in that the threaded sleeve (16) has an annular flange (54), a face (56) of which, which face is on the side of the machining blade insert, serves as a rolling surface for the balls (58) of the ball ring.

10. The insert according to one of the Claims 1 to 9, characterized in that the threaded sleeve (16) has at its end on the side of the machining blade insert a guide bore (51) for a cylindrical shaft part (20) of the machining blade insert holder (14), which guide bore is preferably widened compared with the internal thread (22).

11. The insert according to one of the Claims 1 to 10, characterized in that the machining blade insert holder (14) has at its end remote from the machining blade insert (12) a coupling adapter (30) guided fixed against rotation in an axial guideway of the housing (10).

12. The insert according to Claim 11, characterized in that the axial guideway is designed as a recess (42), which is multi-edged, preferably square in cross section, in which recess the coupling adapter (30) is guided slidingly, accurately fittingly, therewithin.

13. The insert according to Claim 11 or 12, characterized in that the coupling adapter (30) can be placed with a keyway (28) onto an axially projecting key pin (26) on the machining blade insert holder (14) and can be connected clearance free to same by an axially extending screw connection (36, 40).

14. The insert according to one of the Claims 1 to 13, characterized in that the threaded sleeve (16) has a multi-cornered profile (52) at its end projecting beyond the housing on the side of the machining blade insert to receive an adjusting wrench.

15. The insert according to one of the Claims 1 to 14, characterized in that a scale ring (82) preferably axially covering the thread clamping ring (78) can be forced fit onto the end of the threaded sleeve (16) projecting beyond the housing (10) on the side of the machining blade insert.

16. The insert according to Claim 15, characterized in that the scale ring (82) rests with an annular shoulder (84) against a seal ring (88) arranged in an axial recess (86) of the housing (10).

17. The insert according to one of the Claims 1 to 16, characterized in that the housing (10) on the side of the machining blade insert has a circular flange (90) with blind holes (94) preferably open at the edge to receive fastening screws received on the tool base body.

## Revendications

1. Garniture pour outils à enlèvement de copeaux, qui comporte une enveloppe pouvant être placée dans un évidement, réalisé de préférence sous la forme d'un trou borgne, d'un corps de base d'outil, une broche de réglage qui, réalisée sous la forme d'une douille taraudée (16), est montée de façon à pouvoir tourner dans l'enveloppe mais à être empêchée, sous l'action d'une force axiale, de coulisser ainsi qu'un porte-plaquette qui, portant à sa tête faisant saillie au-delà de l'enveloppe une plaquette et guidé de manière fixe en rotation dans l'enveloppe, s'engage dans un filet de la broche de réglage et peut être amené à coulisser axialement par rotation de la broche de réglage, la douille taraudée (16) présentant dans la région taraudée au moins une échancrure (46) radialement continue, caractérisée en ce que la broche de réglage réalisée sous la forme d'une douille taraudée (16) peut, par déviation d'une partie de la force axiale, être pressée avec son filet intérieur (22), sous une tension initiale, radialement contre le filet de réglage (21) du porte-plaquette (14), en ce que l'échancrure (46) s'étend sensiblement axialement et en ce qu'il est prévu une douille de serrage (60) qui, axialement serrée entre des épaulements (70, 72), disposés l'un en regard de l'autre, de la douille taraudée (16) et de l'enveloppe (10) et embrassant la douille taraudée (16) dans la région taraudée, peut, sous l'action de la force axiale, être élastiquement déformée et ainsi être appuyée radialement contre la douille taraudée (16).

2. Garniture d'outil selon la revendication 1, caractérisée en ce que l'échancrure (46) est ouverte à l'extrémité de la douille taraudée (16) qui est opposée à la plaquette.

3. Garniture d'outil selon la revendication 1, caractérisée en ce que l'échancrure 46 est fermée aux deux extrémités frontales.

4. Garniture d'outil selon l'une quelconque des revendications précédentes, caractérisée en ce que la douille de serrage (60) présente plusieurs encoches axiales (64) réparties sur sa périphérie.

5. Garniture d'outil selon la revendication 4, caractérisée en ce que les encoches axiales sont orientées alternativement de côtés opposés.

6. Garniture d'outil selon l'une quelconque des revendications précédentes, caractérisée en ce que la douille de serrage (60) prend appui avec des surfaces coniques frontales (62, 63) contre un cône intérieur disposé respectivement sur un épaulement (70) côté douille taraudée et un épaulement (72) côté enveloppe.

7. Garniture d'outil selon la revendication 6, caractérisée par des bagues de montage (66, 67) qui, présentant ledit cône intérieur, prennent axialement appui respectivement contre les épaulements (70, 72) de la douille taraudée (16) et de l'enveloppe (10) et radialement contre une surface d'alésage (74) de l'enveloppe (10).

8. Garniture d'outil selon l'une quelconque des revendications précédentes, caractérisée par une bague de serrage filetée (78) qui, susceptible d'être vissée, côté plaquette, dans un filet intérieur (76) de l'enveloppe (10), peut, par l'intermédiaire d'une couronne de billes, être appuyée axialement, sous l'effet de la force axiale, contre la douille taraudée (16) montée dans l'enveloppe (10).

9. Garniture d'outil selon la revendication 8, caractérisée en ce que la douille taraudée (16) présente un collet (54) s'étendant sur tout le pourtour et dont la face frontale (56) côté plaquette sert de surface de roulement aux billes (58) de la couronne de billes.

10. Garniture d'outil selon l'une quelconque des revendications précédentes, caractérisée en ce que la douille taraudée (16) présente, à son extrémité côté plaquette, un alésage de guidage (51), de préférence élargi par rapport au filet intérieur (22), pour une partie cylindrique (20) formant fût du porte-plaquette (14).

11. Garniture d'outil selon l'une quelconque des revendications précédentes, caractérisée en ce que le porte-plaquette (14) présente, à son extrémité opposée à la plaquette (12), une pièce d'entraînement (30) guidée de manière fixe en rotation dans un guide axial de l'enveloppe (10).

12. Garniture d'outil selon la revendication 11, caractérisée en ce que le guide axial est réalisé sous la forme d'un évidement à section polygonale, de préférence carré (42), dans lequel est guidée de façon à pouvoir glisser de manière ajustée la pièce d'entraînement (30).

13. Garniture d'outil selon la revendication 11 ou 12, caractérisée en ce que la pièce d'entraînement (30) peut être mise en place avec une cannelure (28) sur un prolongement cannelé (26), faisant saillie axialement, du porte-plaquette (14) et peut être assujettie à celui-ci, sans jeu, par l'intermédiaire d'une liaison à vis axiale (36, 40).

14. Garniture d'outil selon l'une quelconque des revendications précédentes, caractérisée en ce que la douille taraudée (16) présente, à son extrémité faisant saillie au-delà de l'enveloppe (10) du côté de la plaquette, un profil polygonal (52) pour la mise en place d'une clé de réglage.

15. Garniture d'outil selon l'une quelconque des revendications précédentes, caractérisée en ce que sur l'extrémité de la douille taraudée (16) qui fait saillie au-delà de l'enveloppe (10) du côté de la plaquette, peut être emmanché par pression un anneau gradué masquant de préférence la bague de serrage filetée (78) axialement.

16. Garniture d'outil selon la revendication 15, caractérisée en ce que l'anneau gradué (82) prend appui avec un élément annexe annulaire (84) contre une bague d'étanchéité (88) montée dans une encoche axiale (86) de l'enveloppe (10).

17. Garniture d'outil selon l'une quelconque des revendications précédentes, caractérisée en ce que l'enveloppe (10) présente du côté de la plaquette une bride (90), s'étendant sur tout le pourtour, avec des évasements de préférence à bord ouvert (94) pour recevoir des vis de fixation s'engageant dans le corps de base de l'outil.
